Europäisches Patentamt

European Patent Office

Office européen des brevets

(19)

(11) Publication number: **0 311 440 B1**

(12) **EUROPEAN PATENT SPECIFICATION**

(45) Date of publication of patent specification: **24.06.92** (51) Int. Cl.5: **G01N 35/06**

(21) Application number: **88309401.3**

(22) Date of filing: **07.10.88**

(54) **Apparatus for carrying out a liquid reaction.**

(30) Priority: **09.10.87 JP 254901/87**
**09.10.87 JP 254902/87**
**06.11.87 JP 280420/87**
**13.01.88 JP 5463/88**

(43) Date of publication of application:
**12.04.89 Bulletin 89/15**

(45) Publication of the grant of the patent:
**24.06.92 Bulletin 92/26**

(84) Designated Contracting States:
**DE FR GB**

(56) References cited:
**WO-A-86/02168        WO-A-87/00083**
**WO-A-87/06008        GB-A- 1 528 424**
**US-A- 3 650 306        US-A- 4 478 094**
**US-E- 27 756**

(73) Proprietor: **SEIKO INSTRUMENTS INC.**
**31-1, Kameido 6-chome Koto-ku**
**Tokyo 136(JP)**

(72) Inventor: **Yamamoto, Tomoo**
**31-1, Kameido 6-chome**
**Koto-ku Tokyo(JP)**
Inventor: **Yagi, Shigeki**
**31-1, Kameido 6-chome**
**Koto-ku Tokyo(JP)**
Inventor: **Sakabe, Munechika**
**31-1, Kameido 6-chome**
**Koto-ku Tokyo(JP)**
Inventor: **Segawa, Osamu**
**31-1, Kameido 6-chome**
**Koto-ku Tokyo(JP)**
Inventor: **Kobayashi, Kiyoshi**
**31-1, Kameido 6-chome**
**Koto-ku Tokyo(JP)**

(74) Representative: **Miller, Joseph et al**
**J. MILLER & CO. Lincoln House 296-302 High Holborn**
**London WC1V 7JH(GB)**

EP 0 311 440 B1

## Description

This invention relates to an apparatus for carrying out a liquid reaction and, although the invention is not so restricted, it relates more particularly to an apparatus for automatically carrying out a liquid reaction in a laboratory or sample treatment, e.g. a reaction in which there is a very small quantity of a liquid sample and of a reagent, the apparatus employing an automated pipetter.

In the biochemical field, many enzyme reaction processes are used to analyze biochemical samples such as protein and nucleic acid in a laboratory.

Such enzyme reaction processes are composed of numerous repetitions of treating a very small quantity of liquid and thermally treating the latter at a precise temperature. Conventionally, such enzyme reaction processes are carried out manually by laboratory staffs and are therefore very tedious to perform.

In recent years, sample preparation processes have attempted to carry out the processes by robots instead of by human beings. Experimental instruments, reagents and a robotic arm capable of manipulating sample tubes and syringes have been placed on a desk and the robotic arm has been controlled so as to carry out the sample preparation processes by using experimental instruments and reagents. F.H.Zenie et al described in detail such a robotic approach to automated sample preparation in AMERICAN LABORATORY, June 1982, pages 96-104.

The robotic approach suggested in the prior art involves disposing the experimental instruments and reagents on a plane, and thus requires a large space for installation. Accordingly, once installed, the robot system occupies almost all the space on the desk, thus leaving no space for other apparatus. Further, reagents such as enzymes which are unstable at room temperature cannot be kept on the desk, and therefore the process is particularly unsuitable for the treatment of enzymes and the like.

In WO 86/02168 there is disclosed an apparatus for carrying out a liquid reaction comprising slidably mounted means adapted to carry a sample cell or cells and a reagent cell or cells; pipetting means for sucking a reagent from a reagent cell and discharging it into a sample cell; means for sliding the slidably mounted means horizontally to and from positions in which a sample cell and a reagent cell are respectively in vertical alignment with the pipetting means; and means for effecting vertical sliding movement of the pipetting means into and out of a position or positions in which reagent may be sucked from a reagent cell and discharged into a sample cell.

According, therefore, to the present invention, there is provided apparatus for carrying out a liquid reaction comprising slidably mounted means adapted to carry a sample cell or cells and a reagent cell or cells; pipetting means for sucking a reagent from a reagent cell and discharging it into a sample cell; means for sliding the slidably mounted means horizontally to and from positions in which a sample cell and a reagent cell are respectively in vertical alignment with the pipetting means; and means for effecting vertical sliding movement of the pipetting means into and out of a position or positions in which reagent may be sucked from a reagent cell and discharged into a sample cell, characterised in that the said slidably mounted means comprises separate slidably mounted first and second stages for respectively carrying the sample cell or cells and the reagent cell or cells, heating means being provided for heating a sample cell carried by the first stage, the heating means comprising an upper heating plate for heating an upper surface of a sample cell, and a lower heating plate for heating a lower surface of the sample cell, there being control means for maintaining the upper and lower heating plates in heat-transmitting contact with the upper and lower surfaces of the sample cell and for removing the lower heating plate from the sample cell while leaving the upper heating plate in heat-transmitting contact therewith.

The heating means may comprise first contact means for establishing heat-transmitting contact between the upper heating plate and the upper surface of the sample cell and second contact means for establishing heat-transmitting contact between the lower heating plate and the lower surface of the sample cell.

Control means may be provided for maintaining the upper and lower heating plates in heat-transmitting contact between the lower heating plate and the lower surface of the sample cell and for removing the lower heating plate from the sample cell while leaving the upper heating plate in heat-transmitting contact therewith.

Cooling means may be provided for cooling the reagent cell or cells.

The pipetting means may be carried by a frame which is mounted for vertical sliding movement on a horizontally movable base, means being provided for effecting vertical movement of the frame and horizontal movement of the base.

The pipetting means may comprise a needle guide carried by the frame and a needle which is slidably mounted in the needle guide and is carried by a support member, the support member being mounted for vertical sliding movement on the frame, means being provided for effecting said vertical sliding movement.

Detecting means may be provided for detectng the vertical position of the frame and for sending a detection signal to a control means for stopping movement of the frame.

The apparatus may have a third slidably mounted stage which is adapted to support at least one conical member which can be mounted on the pipetting means, means being provided for sliding the third stage horizontally to and from a position in which a conical member is in vertical alignment with the pipetting means.

In its preferred form, the apparatus of the present invention provides an automatic liquid reactor which occupies little space on a desk, which is capable of retaining unstable reagents such as enzymes therein for a long period, and whose operation is very simple and easy.

In its preferred form, moreover, the apparatus employs two stages which are capable of sliding horizontally and along axes. A micro-plate which has a plurality of recesses in rows is placed in the first stage and reagent bottles are placed on the second stage. A pipetter is supported both on a horizontal shaft guide rail operating slidably horizontally and along an axis perpendicular to the axes along which the two stages slide. The horizontal shaft guide rail is supported on a vertical shaft guide rail so as to operate slidably in a vertical direction. Thus the pipetter may be moved in a plane perpendicular to the direction in which the two stages slide. When reagents are to be sucked from the reagent bottles, the second stage is moved so that a reagent bottle is disposed below the pipetter and the pipetter is moved downwardly into the reagent bottle to suck the reagent. When the reagent is to be discharged, the first stage is moved so that the microplate is disposed below the pipetter and the pipetter is moved downwardly into a recess to discharge the reagent thereby dispensing a reagent efficiently and minimizing the space required for installation.

The invention is illustrated, merely by way of example, in the accompanying drawings, in which:-

Figure 1 is a perspective view of an apparatus for carrying out a liquid reaction according to the present invention;

Figure 2 is a pictorial view of a keyboard of the apparatus shown in Figure 1;

Figure 3 is a pictorial view of a menu which may appear on a display of the apparatus shown in Figure 1;

Figure 4 is a schematic cross section of an apparatus for carrying out a liquid reaction according to the present invention;

Figure 5 is a block diagram of a driving system of the apparatus of Figure 4;

Figure 6 is a cross section of a pipetter which may be used in the apparatus of Figure 4;

Figure 7 is a cross section of a pipetter of Figure 6 showing a needle guide thereof introduced into a tip;

Figure 8 is a cross-section of the pipetter of Figure 6 showing the arrangement of the parts during the sucking of reagent;

Figure 9 illustrates a circuit block diagram of a photosensor shown in Figure 7;

Figure 10 is a cross sectional view of an upper heater and a lower heater shown in Figure 4 with a microplate sandwiched between two heaters;

Figure 11 is a view similar to Figure 10 but showing the lower heater moved from the position illustrated in Figure 10; and

Figure 12 is a flow diagram illustrating the operation of the apparatus of Figure 4.

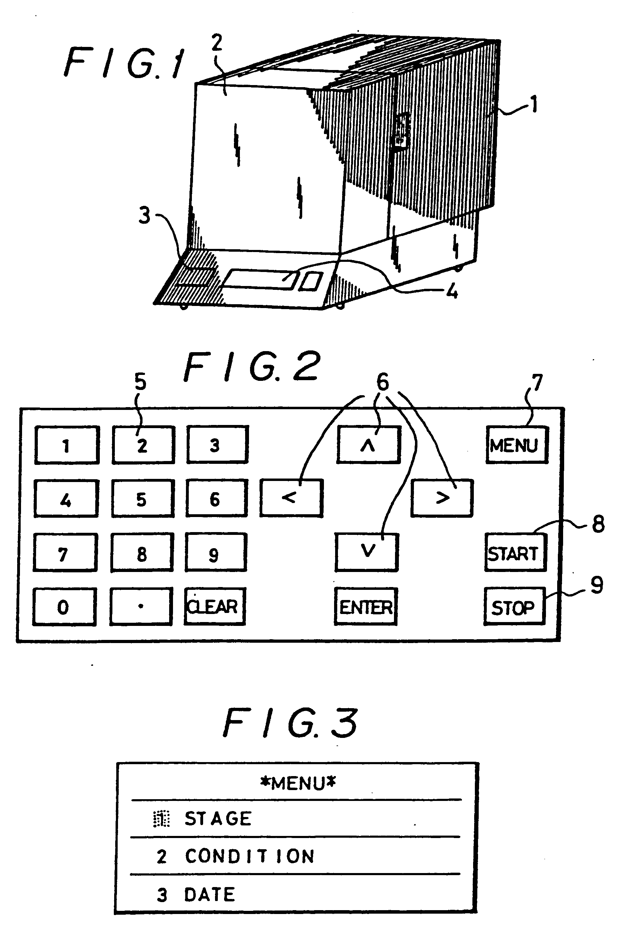

In Figure 1 there is shown an apparatus according to the present invention which can be accommodated on a desk. The apparatus comprises an enclosure 1 having dimensions equivalent to an analyzing balance normally used in a laboratory, and a cover 2 is provided so as to close the whole surface of the enclosure 1. The cover 2 is made of transparent or translucent acrylic resin or the like and thus is see-through so as to make the interior of the enclosure 1 visible. The cover 2 preferably acts as an anti-radiation screen, e.g. against $\beta$ rays, thus enhancing safety when a radiated sample is used. A display 3 and a keyboard 4 are provided on a lower portion of the front of the enclosure 1.

One example of the keyboard 4 is shown in Figure 2. The keyboard 4 comprises digit keys 0 to 9 for inputting a number of samples, conditions and other matters; cursor keys 6 for shifting a cursor indicated on the display 3 upwardly, downwardly, and to the left and right; a menu key 7 for selecting an input mode; a start key 8; and a top key 9 for controlling operation of the apparatus.

Figure 3 shows a menu which constitutes one example of what may be displayed on the display 3. The cursor is shown as flickering on "1" in Figure 3.

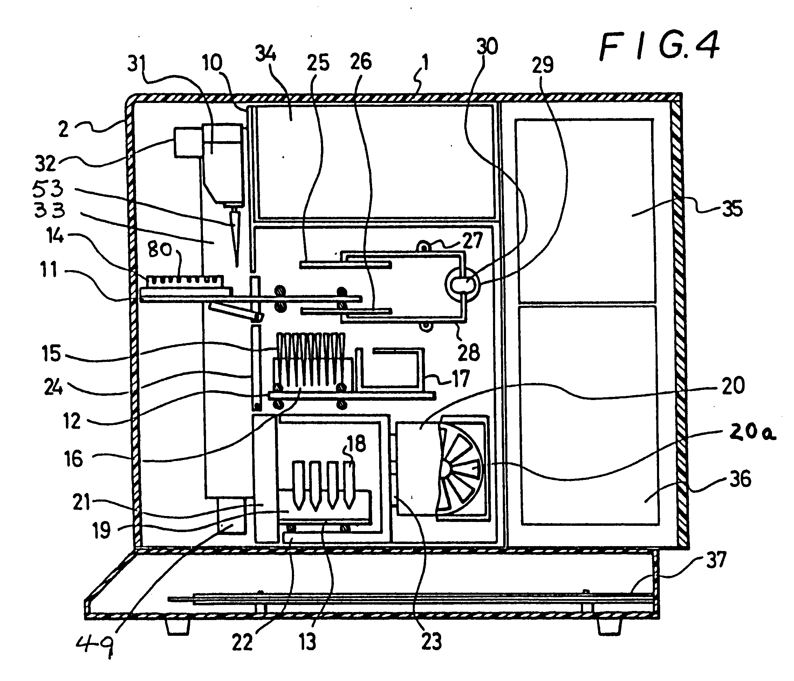

Figure 4 shows a cross section of an apparatus similar to that of Figure 1. An operating part of the apparatus of Figure 4 comprises roughly a dispensing part which is provided at the front of the apparatus. A temperature processing part and a part for holding samples are partitioned by a panel 10.

The apparatus has three slidably mounted stages or tables, namely a first or plate stage 11, a third or tip stage 12, and a second or reagent stage 13 in that order from the top. A microplate 14, having a plurality of rows of small recesses 80 which constitute sample cells, is mounted on the plate stage 11.

A tip stand 16 holding a plurality of tips, or apertured conical members, 15 thereon and a waste tip cell 17 for holding used tips 15 are mounted on the tip stage 12.

A reagent stand 19, with a plurality of reagent cells or bottles 18 disposed thereon, is mounted on the reagent stage 13, and a reagent door 21 is mounted at the front of the reagent stage 13. The reagent cells 18 are arranged to be cooled by a thermo-module 23 mounted between a cooling fan 20 provided with a fan member 20a and a cooler 22 sealed by the reagent door 21.

The arrangement is such that the plate stage 11, the tip stage 12 and the reagent stage 13 are all moved by sliding them between the reagent dispensing part and the temperature treating and sample holding part of the apparatus by a sliding mechanism which is not shown in Figure 4. In order to ensure that the panel 10 acts as a perfect partition when the plate stage 11 and the tip stage 12 shift to the temperature treating and sample holding part, a closable door 24 is provided on each of them.

An upper heater 25 and a lower heater 26 are provided on the temperature treating and sample holding part at vertically spaced positions corresponding to the positions of the upper and lower sides of the microplate 14 at the time when the plate stage 11 is at the end of its use. The upper heater 25 and the lower heater 26 are mounted on arms 28 which can be moved vertically about support points 27.

A cam 30 mounted on a cam driving motor 29 is arranged to position the upper heater 25 and the lower heater 26 vertically through the arms 28. The cam 30 drives either the upper heater 25 or the lower heater 26 only according to its angular position.

In the reagent dispensing part, a pipetter 31 is mounted on a horizontal shaft guide rail 32 so that it can be slidably moved horizontally in a transverse direction. The horizontal shaft guide rail 32 is mounted on a vertical shaft guide rail 33 so that it can be slidably moved in a vertical direction.

An electrical system for controlling the driving part and the temperature processing part of the apparatus comprises a motor drive unit 34 which is mounted on the upper portion of the apparatus; a power unit 35 and a control unit 36 which are mounted on the rear portion of the apparatus; and a temperature regulating unit 37 which is mounted on the bottom portion of the apparatus.

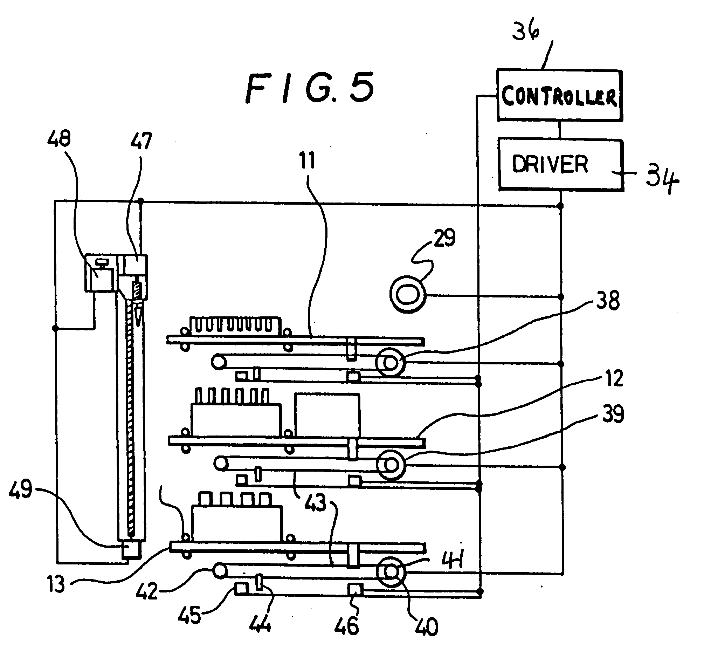

Figure 5 is a block diagram of the driving system. The plate stage 11, the tip stage 12 and the reagent stage 13 are arranged to be slidably moved by a plate stage motor 38, a tip stage motor 39 and a reagent stage motor 40 respectively through a respective timing belt 43 entrained around a motor pulley 41 and a guide roller 42. A light-obstructing plate or douser 44 is mounted on each timing belt 43, and a starting point or origin and an overload point can be detected by preventing light from reaching an origin sensor 45 and a limit sensor 46 respectively which are photo-interrupting type photo sensors.

The pipetter 31 is driven by a pipetter motor 47 to suck and discharge a liquid and is slidably moved on the horizontal shaft guide rail 32 by an horizontal shaft guide rail 32 by an horizontal shaft motor 48. The horizontal shaft rail guide 32 is slidably moved along the vertical shaft guide rail 33 by a vertical shaft motor 49.

The cam driving motor 29, the plate stage motor 38, the tip stage motor 39, the reagent stage motor 40, the pipetter motor 47, the horizontal shaft motor 48 and the vertical shaft motor 49 are driven by the driver or motor drive unit 34 according to signals from the controller or control unit 36. Each sensor signal is inputted to the controller 36 for processing thereby.

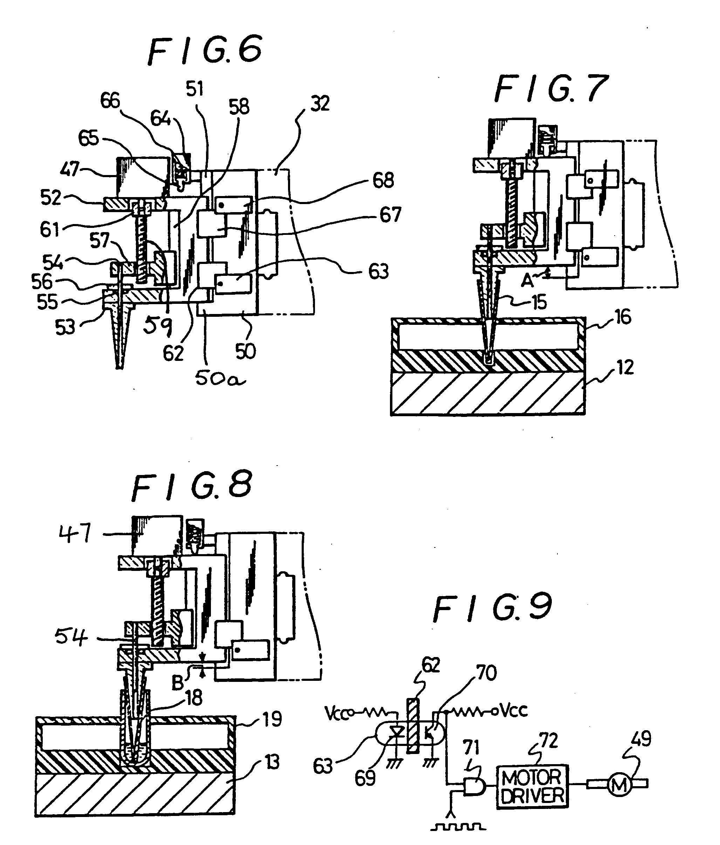

Figure 6 is a sectional view of a pipetter which may be used in an apparatus according to the present invention. The pipetter comprises a movable base 50 which is slidably mounted for horizontal sliding movement on the horizontal shaft guide rail 32, the movable base 50 having a vertically extending guide rail 51 on another face; a pipetter frame 52 which is slidably mounted for vertical movement on the guide rail 51; a needle guide 53 which is fixed on the pipetter frame 52 for frictionally holding a tip 15 thereon; a needle 54 which constitutes a syringe in association with the needle guide 53 and the tip 15 held thereon; an O-ring 55 for sealing the space between the pipetter frame 52 and the needle 54; a plate 56 for retaining the O-ring 55; a moving bed or support member 57 for moving the needle 54 axially of the tip, the moving bed 57 having a screw hole; a vertically extending guide rail 58, which is fixed on the pipette frame 52, for guiding vertical sliding movement of the moving bed 57; a feed screw 59 for feeding the moving bed 57 vertically, the feed screw 59 being in threaded engagement with the screw hole of the moving bed 57: the pipetter motor 47 which is fixed on the pipetter frame 52 and which is arranged to rotate the feed screw 59; a coupling 61 for transferring the torque of the pipetter motor 47 to the feed screw 59; a first sensor plate 62, secured to the pipetter frame 52 for detecting that the needle guide 53 has come in contact with a tip 15 or with the bottom of a reagent cell 18, the final sensor plate 62 cooperating with a first photosensor 63 provided on the movable base 50; a pressurising mechanism 64, fixed on the movable base 50, for pushing the movable base 50, the pressurising mechanism 64 including a push pin 65 for contacting the pipetter frame 52 and a spring 66 for applying a pressure to the push pin 65; and a second sensor plate 67, fixed on the pipetter frame 52, for detecting that the pipetter frame 52 has been slidably moved to a predetermined extent, the second sensor plate 67 cooperating with a second photo sensor 68 fixed on the movable base 50.

Figure 7 illustrates the relationship between the pipetter 31 and the tip stand 16 at the time of inserting a tip 15 on the needle guide 53. First, the horizontal shaft motor 48 (Figure 5) is driven so as to move the needle guide 53 of the pipetter 31 to a position in which it is located above a tip 15. The vertical shaft motor 49 (Figure 5) is driven successively so as to move the pipetter 31 downwardly until the second sensor plate 67 obstructs light falling on the second photosensor 68. The pipetter 31 is then fed further down after the needle guide 53 is inserted into the tip 15 and comes into contact with the latter.

The pipetter frame 52 is then slidably moved upwardly relatively to the movable base 50 and the first sensor plate 62 is moved away from the first photosensor 63. Thus the first photosensor 63 is actuated to detect the contact of the tip 15 with the needle guide 53.

If the pipetter 31 is to be moved downwardly thereafter, a pressure is applied by the pressurising mechanism 64. Thus, if the pipetter 31 is moved downwardly continuously, the tip 15 is inserted at a pressure proportional to the distance of descent after having come in contact with the needle guide 53. When an arbitrary pressure is reached, that is, when the pipetter 31 has descended by a predetermined distance (A), the second sensor plate 67 obstructs light to the second photosensor 68 and thereby detects that the tip 15 has been inserted at a predetermined pressure. Thus, the vertical shaft motor 49 stops. When the insertion of the tip 15 is over, the vertical shaft motor 49 rotates so that the pipetter 31 ascends, and the operation for tip insertion ends.

According to this operation, the degree of insertion of the needle guide 53 in the tip 15 may be kept uniform irrespective of variations in the tip size. Further, an excessive load will never be applied to the pipetter 31 and the motor 49.

Figure 8 illustrates the relationship between the pipetter 31 and the reagent cell 18 when the tip 15 has been inserted into the reagent cell 18.

First, the horizontal shaft motor 48 (Figure 5) is driven so as to move the tip 15 to a position where it is located above the reagent cell 18. The vertical shaft motor 49 (Figure 5) is then driven successively so as to move the pipetter 31 downwardly until the first photosensor 63 detects the contact of the tip 15 with the bottom of the reagent cell 18.

Simultaneously with the vertical shaft motor 49 stopping as a result of this detection, the pipetter motor 47 of the pipetter 31 is rotated a predetermined amount clockwise as viewed from the top. The needle 54 therefore ascends a predetermined amount. Consequently, the pressure in the space of the tip 15 becomes negative with respect to the atmospheric pressure, and a predetermined amount of the reagent in the cell 18 is sucked out from the latter and into the tip 15. When the suction is over, the vertical shaft motor 49 is driven so as to move the pipetter 31 upwards and the operation for effecting the suction ends.

Then, in the case of the operation for effecting the discharge of the reagent, the feed motion to the needle 54 is merely reversed with respect to the suction operation described as above, and therefore will not be described further.

Next, there will be described in detail a mechanism for detecting contact of the tip 15 with a cell 18. The pipetter frame 52 and the guide rail 51 are in contact with each other so as to permit vertical sliding motion of the pipetter frame 52. In the position of the parts shown in Figure 6, the pipetter frame 52 is in contact under gravity with a projection 50a of the movable base 50. The first photosensor 63 fixed on the movable base 50 is capable of discriminating as to whether or not an object is present between a light emitting part and light receiving part of the photosensor 63. The first sensor plate 62, which is fixed on the pipetter frame 52, at this time obstructs a gap between the light emitting part and the light receiving part of the first photosensor 63. Then, if the nose portion of the tip 15 comes into direct contact with the reagent cell 18, the pipetter frame 52 cannot be moved downwardly. However, since the pipetter frame 52 is slidable with respect to the movable base 50, the movable base 50 keeps moving downwardly unless the vertical shaft motor 49 which moves the movable base 50 stops. Then, the relative positioning between the pipetter frame 52 and the movable base 50 is displaced by a dimension B as shown in Figure 8. That is, a displacement may arise in the positional relationship between the first sensor plate 62 and the adjacent first photosensor 63. Then, the time will come when the sensor plate 62 comes out of the gap between the light emitting part andthe light receiving part of the first photosensor 63. In this case, a signal will be transmitted to a controller (not shown) from the first photosensor 63, and the controller will issue a rotation stop command to the vertical shaft motor 49. The motor 49 therefore comes to a stop, and the nose portion of the tip 15 may come in contact with the bottom portion of the reagent cell 18 with a pressure determined by the weight of the pipetter frame 52 and other parts associated therewith.

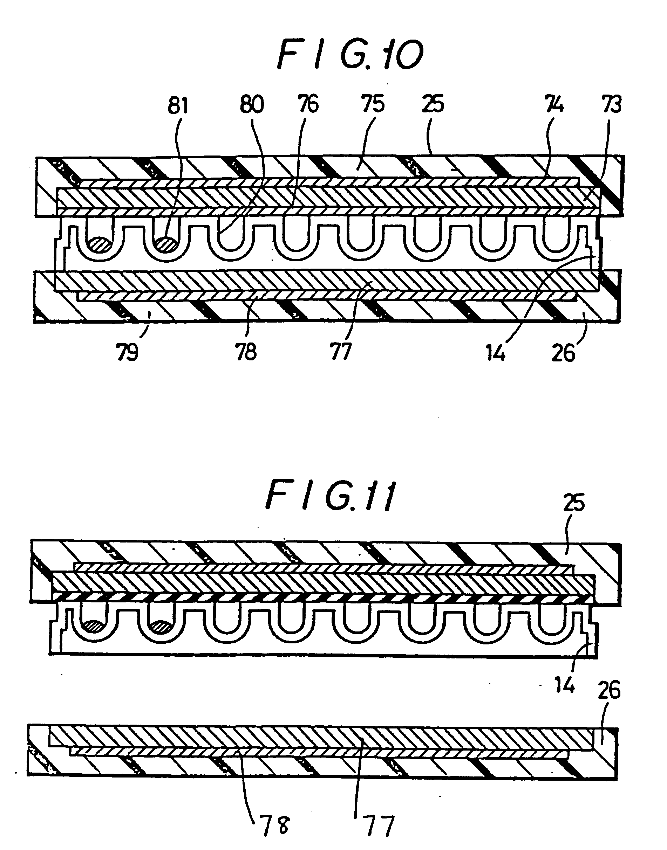

Figure 9 illustrates two modes of electrical operation which respectively depend on the positional relationship between the sensor plate 62 and the first photosensor 63.

An LED 69 and a photo-transistor 70 shown in Figure 9 are equivalent to the first photosensor 63 of Figure 6. A current will not flow between the collector and the emitter of the photo-transistor 70 when a gap between the LED 69 and the photo-transistor 70 is obstructed by the plate 62. One input voltage of a two-input AND element 71 is Vcc, and a motor drive pulse signal, appears directly on the output. The motor drive pulse signal drives the motor 49 through a motor driver 72. On the other hand, when there is nothing present between the LED 69 and the photo-transistor 70, a current flows between the collector and the emitter of the photo-transistor 70, and one input voltage of the AND element 71 will be at ground level. Therefore, the output becomes a direct current regardless of the other input, and hence the drive signal is not inputted to the motor 49. As described, the operation of the motor 49 is controlled according to whether or not an object is present in the gap between the LED 69 and the photo-transistor 70.

The positional relationship between the nose portion of the tip 15 and the reagent cell 18 may be kept constant irrespective of the shape of the reagent cell and of any error in the shape of the pipetter. Further, the contact of the tip 15 with the test tube constituting the cell 18 may be such as to prevent liquid from mixing in, thereby ensuring precise discharge and suction.

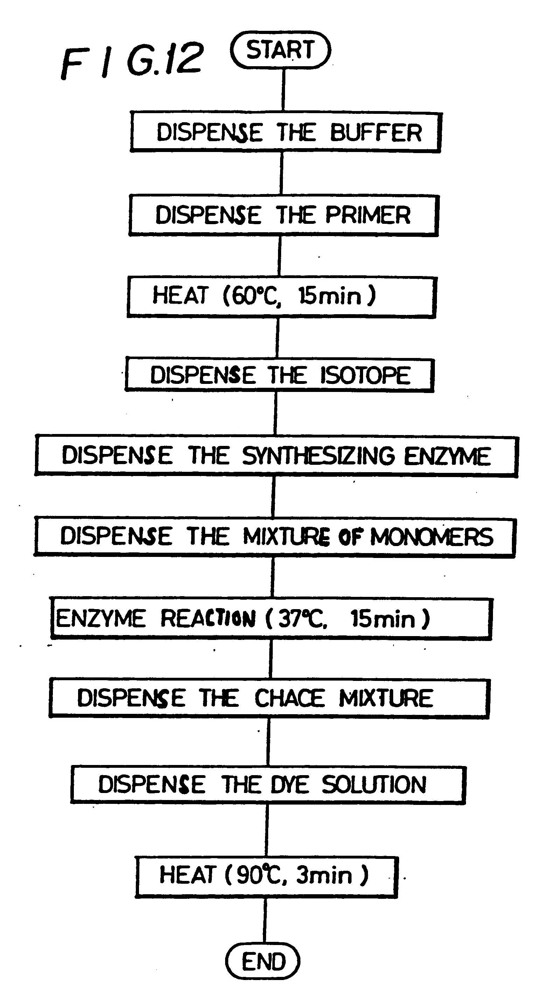

In Figures 10 and 11, the upper heater 25 is shown as comprising an upper heating element or plate 74 which is tightly secured to the upper surface of an upper heating or temperature soaking plate 73. The upper heating element 74 is covered by an insulating material 75 thereon, and the upper heating plate 73 has a resilient conductive plate 76, e.g. of conductive rubber, on its lower surface.

The lower heater 26 comrpises a lower heating element or plate 78 which is tightly secured on the lower surface of a lower heating or temperature soaking plate 77. The lower heating element 78 is covered by an insulating material 79 from below.

Figure 10 shows the state in which the microplate 14 is sandwiched between the upper heater 25 and the lower heater 26 so as to be heated. In this case, since the upper heater 25 and the lower heater 26 are controlled so as to be at the same set temperature, a vertical temperature gradient between the two heaters can be minimized, and the precision and accuracy of the temperature control of a liquid in the micro-plate 14 can be enhanced. Further the recesses or wells 80 in the micro-plate 14 are covered by the resilient plate 76 so as to seal the top of the micro-plate 14, thereby raising the pressure of the space in the wells 80, whereby any evaporation of liquid 81 in the wells 80 can be decreased.

Figure 11 shows the state in which the lower heater 26 is detached from the lower surface of the micro-plate 14 to cool the latter while the upper surface of the micro-plate 14 remains pressed against the upper heater plate 25. The cooling effected in the state of Figure 11 is that from a state where the upper heater 25, the micro-plate 14 and the lower heater 26 are heated almost to the same temperature. Accordingly, the cooling rate of the liquid 81 in the micro-plate 14 is higher than the cooling rate of the upper heater 25. Therefore the liquid vaporized in the space in the well 80 can be cooled without settling on the lower surface of the upper heater plate 25. A mechanism for the positional control of the upper heater 25, the micro-plate 14 and the lower heater 26 is constituted by the cam driving motor 29.

The construction shown in Figures 10 and 11 is effective in enhancing the precision and accuracy of the temperature control of the micro-plate 14 when the latter is sandwiched and heated between the upper heater 25 and the lower heater 26, and is also effective in minimizing loss of liquid in the micro-plate 14 after the heating is over and the lower heater 26 has been moved away from the lower surface of the micro-plate 14 for cooling purposes.

Figure 12 illustrates the operation of the apparatus of Figure 4. The example illustrated in Figure 12 relates to an enzyme reaction process for analyzing a DNA base sequence according to the method of Sanger et al (Sanger, F., Nicklen, S. and Coulson A.R., "DNA sequencing with chain terminating inhibitors. "Proc Nat Acad. Sci USA 74, 5463-5467 (1977)). The process is started by introducing samples into the recesses 80 in the micro-plate 14 on the plate stage 11. The tip stage 12 opens the door 24 so as to come out of the dispensing part of the apparatus. Next, the pipetter 31 descends along the vertical shaft guide rail 33, and the tip 15 is installed. The pipetter 31 is lifted and the tip stage 12 is held in position. The reagent stage 13 is slidably moved to the dispensing part of the apparatus, and the pipetter 31 is moved downwardly to suck a buffer solution in the reagent cell 18. Then the pipetter 31 is lifted, the reagent stage 13 is held in position, and the plate stage 11 is drawn out. The pipetter 31 is kept descending until it comes in contact with the bottom of a recess 80 in the micro-plate 14. The pipetter motor 47 is driven so as to lift the pipetter 31 slowly, and thus a very small quantity of liquid is discharged successively into the recesses 80 of the micro-plate 14. The plate stage 11 is held in position, the tip stage 12 is drawn out, the tip on the nose of the pipetter 31 is caught on the waste tip cell 17 and is thus discharged into the waste tip cell 17. A primer solution is dispensed into the recesses in the micro-plate 14 through a simlar operation.

Next, the plate stage 11 is held in position, and the upper heater 25 and the lower heater 26 are driven by the cam driving motor 29 to sandwich the micro-plate 14 vertically through the cam 30 and the arm 28, so that the micro-plate 14 can be given a thermal treatment.

After the thermal treatment has been applied for a predetermined time, e.g. for 15 minutes at 60°C; the cam 30 is rotated to detach the micro-plate 14 from the upper heater 25 and the lower heater 26, and the next operation ensues. Operations for dispensing an isotope, a synthesizing enzyme and a mixture of monomers are carried out in a similar way and heating is effected, e.g. at 37°C for 15 minutes, to produce an enzyme reaction. After this, a chase mixture and a dye solution are dispensed and heating is effected, e.g. at 90°C for 3 minutes.

The product obtained as above is subjected to electrophoresis and then analyzed.

A reagent such as an enzyme or the like which is unstable to heat can thus be retained for a long period of time, and the temperature environment necessary for the reaction of such an enzyme or the like can be produced. Further, since the space occupied by the apparatus is minimized, its installation on a desk will not hinder other work incidental thereto.

**Claims**

1. Apparatus for carrying out a liquid reaction comprising slidably mounted means (11,13) adapted to carry a sample cell or cells (80) and a reagent cell or cells (18); pipetting means (53,54) for sucking a reagent from a reagent cell (18) and discharging it into a sample cell (80); means (38,40) for sliding the slidably mounted means (11,13) horizontally to and from positions in which a sample cell (80) and a reagent cell (18) are respectively in vertical alignment with the pipetting means (53,54); and means (49,50,52) for effecting vertical sliding movement of the pipetting means (53,54) into and out of a position or positions in which reagent may be sucked from a reagent cell (18) and discharged into a sample cell (80), characterised in that the said slidably mounted means (11,13) comprises separate slidably mounted first and second stages (11,13) for respectively carrying the sample cell or cells (80) and the reagent cell or cells (18), heating means (25,26) provided for heating a sample cell (80) carried by the first stage (11), the heating means (25,26) comprising an upper heating plate (74) for heating an upper surface of a sample cell (80), and a lower heating plate (78) for heating a lower surface of the sample cell (80), there being control means for maintaining the upper and lower heating plates (74,78) in heat-transmitting contact with the upper and lower surfaces of the sample cell (80) and for removing the lower heating plate (78) from the sample cell (80) while leaving the upper heating plate (74) in heat-transmitting contact therewith.

2. Apparatus as claimed in claim 1 characterised in that the heating means (25,26) comprise first contact means (73,76) for establishing heat-transmitting contact between the upper heating plate (74) and the upper surface of the sample cell (80) and second contact means (77) for establishing heat-transmitting contact between the lower heating plate (78) and the lower surface of the sample cell (80).

3. Apparatus as claimed in claim 1 or 2 characterised in that cooling means (20-22) are provided for cooling the reagent cell or cells (18).

4. Apparatus as claimed in any preceding claim characterised in that the pipetting means (53,54) is carried by a frame (52) which is mounted for vertical sliding movement on a horizontally movable base (50), means (49,48) being provided for effecting vertical movement of the frame (52) and horizontal movement of the base (50).

5. Apparatus as claimed in claim 4 in which the pipetting means (53,54) comprises a needle guide (53) carried by the frame (52) and a needle (54) which is slidably mounted in the needle guide (53) and is carried by a support member (57), the support member (57) being mounted for vertical sliding movement on the frame (52), means (47,59) being provided for effecting said vertical sliding movement.

6. Apparatus as claimed in claim 4 or 5 characterised in that detecting means (62,63,67,68) are provided for detecting the vertical position of the frame (52) and for sending a detection signal to a control means (36) for stopping movement of the frame (52).

7. Apparatus as claimed in any preceding claim characterised in that the apparatus has a third slidably counted stage (12) which is adapted to support at least one conical member (15) which can be mounted on the pipetting means (53,54), means (39) being provided for sliding the third stage (12) horizontally to and from a position in which a conical member (15) is in vertical alignment with the pipetting means (53,54).

**Revendications**

1. Appareil pour accomplir une réaction en milieu liquide comprenant des moyens montés de façon glissante (11, 13) qui sont conçus pour porter une ou plusieurs cellules d'échantillon (80) et une ou plusieurs cellules de réactif (18); des moyens de prélèvement à pipette (53, 54) qui sont destinés à aspirer un réactif dans une cellule de réactif (18) et à l'évacuer dans une cellule d'échantillon (80); des moyens (38, 40) qui sont destinés à faire glisser horizontalement les moyens montés de façon glissante (11, 13), vers des positions dans lesquelles une cellule d'échantillon (80) et une cellule de réactif (18) sont respectivement en alignement vertical avec les moyens de prélèvement à pipette (53, 54), et à partir de ces positions; et des moyens (49, 50, 52) qui sont destinés à provoquer un mouvement de glissement vertical des moyens de prélèvement à pipette (53, 54) vers une ou plusieurs positions dans lesquelles un réactif peut être aspiré à partir d'une cellule de réactif (18) et évacué dans une cellule d'échantillon (80), et à partir de ces positions, caractérisé en ce que les moyens montés de façon glissante (11, 13) comprennent des premier et second plateaux séparés (11, 13), montés de façon glissante, qui sont respectivement destinés à porter la cellule ou les cellules d'échantillon (80) et la cellule ou les cellules de réactif (18), des moyens de chauffage (25, 26) incorporés dans le but de chauffer une cellule d'échantillon (80) qui est portée par le premier plateau (11), les moyens de chauffage (25, 26) comprenant une plaque chauffante supérieure (74) qui est destinée à chauffer une surface supérieure d'une cellule d'échantillon (80), et une plaque chauffante inférieure (78) qui est destinée à chauffer une surface inférieure de la cellule d'échantillon (80), des moyens de commande étant incorporés dans le but de maintenir les plaques chauffantes supérieure et inférieure (74, 78) en contact de transmission de chaleur avec les surfaces supérieure et inférieure de la cellule d'échantillon (80) et dans le but de retirer la plaque chauffante inférieure (78) de la cellule d'échantillon (80) en laissant la plaque chauffante supérieure (74) en contact de transmission de chaleur avec la cellule d'échantillon.

2. Appareil selon la revendication 1, caractérisé en ce que les moyens de chauffage (25, 26) comprennent des premiers moyens de contact (73, 76) qui sont destinés à établir un contact de transmission de chaleur entre la plaque chauffante supérieure (74) et la surface supérieure de la cellule d'échantillon (80), et des seconds moyens de contact (77) qui sont destinés à établir un contact de transmission de chaleur entre la plaque chauffante inférieure (78) et la surface inférieure de la cellule d'échantillon (80).

3. Appareil selon la revendication 1 ou 2, caractérisé en ce que des moyens de refroidissement (20-22) sont incorporés pour refroidir la cellule ou les cellules de réactif (18).

4. Appareil selon l'une quelconque des revendications précédentes, caractérisé en ce que les moyens de prélèvement à pipette (53, 54) sont supportés par un châssis (52) qui est monté de façon à pouvoir accomplir un mouvement glissant vertical sur une base mobile en direction horizontale (50), et en ce que des moyens (49, 48) sont incorporés pour produire un mouvement vertical du châssis (52) et un mouvement horizontal de la base (50).

5. Appareil selon la revendication 4, dans lequel les moyens de prélèvement à pipette (53, 54) comprennent un guide d'aiguille (53) qui est supporté par le châssis (52) et une aiguille (54) qui est montée de façon glissaiite dans le guide d'aiguille (53) et qui est portée par une pièce de support (57), la pièce de support (57) étant montée de façon à pouvoir effectuer un mouvement glissant vertical sur le châssis (52), des moyens (47, 59) étant incorporés pour produire ce mouvement glissant vertical.

6. Appareil selon la revendication 4 ou 5, caractérisé en ce que des moyens de détection (62, 63, 67, 68) sont incorporés pour détecter la position verticale du châssis (52) et pour émettre un signal de détection vers des moyens de commande (36) dans le but d'arrêter le mouvement du châssis (52).

7. Appareil selon l'une quelconque des revendications précédentes, caractérisé en ce qu'il comporte un troisième plateau monté de façon glissante (12) qui est conçu pour supporter au moins une pièce conique (15) pouvant être montée sur les moyens de prélèvement à pipette (53, 54), des moyens (39) étant incorporés pour faire glisser horizontalement le troisième plateau (12) vers une position dans laquelle une pièce conique (15) est en alignement vertical avec les moyens de prélèvement à pipette (53, 54), et à partir de cette position.

## Patentansprüche

1. Gerät zur Durchführung einer Flüssigkeitsreaktion, umfassend:

   verschiebbar angebrachte Mittel (11,13), um einen oder mehrere Probenbehälter (80) und einen oder mehrere Reagenzienbehälter (18) zu tragen,

   eine Pipettiereinrichtung (53,54), um eine Reagenz aus einem Reagenzienbehälter (18) zu saugen und um die Reagenz in einen Probenbehälter (80) zu entladen,

   Mittel (38,40), um die verschiebbar angebrachten Mittel (11,13) aus und in Stellungen, in denen die Pipettiereinrichtung (53,54) vertikal mit einem Probenbehälter (80) bzw. Reagenzienbehälter (18) ausgerichtet ist, horizontal zu verschieben, und

   Mittel (49;50,52), um die Pipettiereinrichtung (53,54) aus einer oder mehreren Stellungen in eine oder mehrere Stellungen, in der eine Reaganz aus einem Reagenzienbehälter (18) gesaugt und in einen Probenbehälter (80) entladen werden rann, vertikal zu verschieben, dadurch **gekennzeichnet, daß**

   die verschiebbar angebrachten Mittel (11,13) getrennte, verschiebbar angebrachte erste und zweite Plattformen (11,13) zum Tragen des Probenbehälters (80) oder der Probenbehälter (80) bzw. zum Tragen des Reagenzbehälters (18) oder der Reagenzienbehälter (18) aufweisen,

   und daß eine Heizeinrichtung (25,26) zum Heizen eines von der ersten Plattform (11) getragenen Probenbehälters (80) vorgesehen ist, welche eine obere Heizplatte (74) zum Beheizen einer oberen Oberfläche eines Probenbehälters (80), eine untere Heizplatte (78) zum Beheizen einer unteren Oberfläche eines Probenbehälters (80) und eine Steuereinrichtung aufweist, um die oberen und die unteren Heizplatten (74,78) in wärmeleitendem Kontakt mit den oberen und unteren Oberflächen des Probenbehälters (80) zu belassen und um die untere Heizplatte (78) vom Probenbehälter (80) zu entfernen, wahrend die obere Heizplatte (74) in wärmeleitendem Kontakt mit dem Probenbehälter belassen wird.

2. Gerät nach Anspruch 1 dadurch **gekennzeichnet, daß**

   die Heizeinrichtung (25,26) erste Kontaktanordnungen (73,76) zum Herstellen eines wärmeleitenden Kontakts zwischen der oberen Heizplatte (74) und der oberen Oberfläche des Probenbehälters (80) und zweite Kontaktanordnungen (77) zur Herstellung eines wärmeleitenden Kontakts zwischen der unteren Heizplatte (78) und der unteren Oberfläche des Probenbehälters (80) umfasst.

3. Gerät nach Anspruch 1 oder 2 dadurch **gekennzeichnet, daß** eine Kühleinrichtung (20-22) vorgesehen ist, um den oder die Reagenzienbehälter (18) zu kühlen.

4. Gerät nach einem der Ansprüche 1 bis 3 dadurch **gekennzeichnet, daß**

   die Pipettiereinrichtung (53,54) von einem Rahmen (52) getragen werden kann, der zur vertikalen, gleitenden Bewegung auf einem horizontal beweglichen Basisgestell (50) angebracht ist, wobei Mittel (49,48) vorgesehen sind, um die vertikale Bewegung des Rahmens (52) und die horizontale Bewegung des Basisgestells (50) zu bewirken.

5. Gerät nach Anspruch 4 dadurch **gekennzeichnet, daß**

   die Pipettiereinrichtung (53,54) eine vom Rahmen (52) getragene Nadelführung (53) und eine Nadel (54), die verschiebbar in der Nadelführung (53) gelagert ist und von einem Stützglied (57) getragen wird, vorsieht, wobei das Stützglied (57) zur vertikalen gleitenden Bewegung auf dem Rahmen (52) angebracht ist, und Mittel (47,59), die diese vertikale gleitende Bewegung bewirken, vorgesehen sind.

6. Gerät nach Anspruch 4 oder 5 dadurch **gekennzeichnet, daß**

   Erfassungseinrichtungen (62,63,67,68) vorgesehen sind, um die vertikale Position des Rahmens (52) zu erfassen und um ein Erfassungssignal an eine Steuereinrichtung (36) zu senden, um die Bewegung des Rahmens (52) zu stoppen.

7. Gerät nach einem der Ansprüche 1 bis 6 dadurch **gekennzeichnet, daß**

   eine dritte verschiebbare Plattform (12) , zum Tragen wenigstens eines konischen Elements (15), welches auf der Pipettiereinrichtung (53,54) angebracht werden kann, und

   Mittel (39), welche die dritte Plattform (12) horizontal in und aus einer Position verschieben, in der ein konisches Element (15) in vertikaler Anordnung mit der Pipettiereinrichtung (53,54) ist,

   vorgesehen sind.

## F I G. 1

## F I G. 2

## F I G. 3

| *MENU* |
|---|
| ▓ STAGE |
| 2 CONDITION |
| 3 DATE |

FIG.4

# FIG. 5

CONTROLLER 36

DRIVER 34

48 47 11 29 38 12 39 43 41 49 13 42 45 44 46 40

EP 0 311 440 B1

## F I G. 6

## F I G. 7

## F I G. 8

## F I G. 9

## F I G. 10

## F I G. 11

# F I G.12

START

DISPENSE THE BUFFER

DISPENSE THE PRIMER

HEAT (60°C, 15min)

DISPENSE THE ISOTOPE

DISPENSE THE SYNTHESIZING ENZYME

DISPENSE THE MIXTURE OF MONOMERS

ENZYME REACTION (37°C, 15min)

DISPENSE THE CHACE MIXTURE

DISPENSE THE DYE SOLUTION

HEAT (90°C, 3min)

END